(19) Europäisches Patentamt
European Patent Office
Office européen des brevets

(11) EP 1 489 906 B1

(12) **EUROPÄISCHE PATENTSCHRIFT**

(45) Veröffentlichungstag und Bekanntmachung des Hinweises auf die Patenterteilung:
**20.06.2007 Patentblatt 2007/25**

(21) Anmeldenummer: **03712051.6**

(22) Anmeldetag: **19.03.2003**

(51) Int Cl.:
***A01N 43/653*** (2006.01) ***A01N 43/40*** (2006.01)

(86) Internationale Anmeldenummer:
**PCT/EP2003/002845**

(87) Internationale Veröffentlichungsnummer:
**WO 2003/090538 (06.11.2003 Gazette 2003/45)**

# (54) FUNGIZIDE MISCHUNGEN

FUNGICIDAL MIXTURES

MELANGES FONGICIDES

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**LT LV**

(30) Priorität: **21.03.2002 DE 10212704**

(43) Veröffentlichungstag der Anmeldung:
**29.12.2004 Patentblatt 2004/53**

(60) Teilanmeldung:
**07102911.0 / 1 790 226**

(73) Patentinhaber: **BASF Aktiengesellschaft**
**67056 Ludwigshafen (DE)**

(72) Erfinder:
- **AMMERMANN, Eberhard**
  **64646 Heppenheim (DE)**
- **STIERL, Reinhard**
  **67251 Freinsheim (DE)**
- **LORENZ, Gisela**
  **67434 Neustadt (DE)**
- **SCHÖFL, Ulrich**
  **68782 Brühl (DE)**
- **STRATHMANN, Siegfried**
  **67117 Limburgerhof (DE)**
- **SCHELBERGER, Klaus**
  **67161 Gönnheim (DE)**
- **CHRISTEN, Thomas**
  **67125 Dannstadt-Schauernheim (DE)**

(56) Entgegenhaltungen:
**WO-A-01/80641**
**WO-A-98/47367**
**WO-A-98/47370**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 489 906 B1

## Beschreibung

Die vorliegende Erfindung betrifft fungizide Mischungen, enthaltend

(1) 2-[2-(1-Chlorcyclopropyl)-3-(2-chlorphenyl)-2-hydroxypropyl]-2,4-dihydro-[1,2,4]-triazol-3-thion (Prothioconazole) der Formel I oder dessen Salze oder Addukte

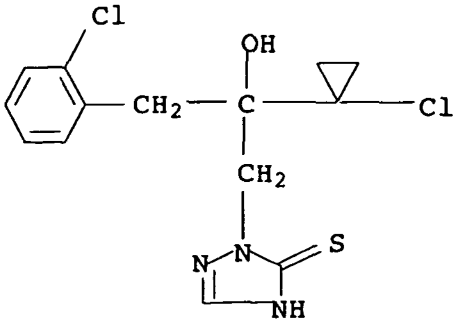

(I)

(Prothioconazole)

und eine weitere fungizide Verbindung, ausgewählt aus

(2) Boscalid der Formel II

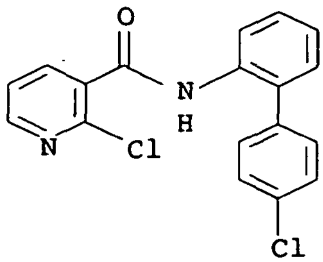

(II)

in einer synergistisch wirksamen Menge.

Außerdem betrifft die Erfindung ein Verfahren zur Bekämpfung von Schadpilzen mit Mischungen der Verbindung I mit der Verbindung II und die Verwendung der Verbindung I mit der Verbindung II zur Herstellung derartiger Mischungen sowie Mittel, die diese Mischungen enthalten.

Das Prothioconazole der Formel I, das 2-[2-(1-Chlorcyclopropyl)-3-(2-chlorphenyl)-2-hydroxypropyl]-2,4-dihydro-[1,2,4]-triazol-3-thion ist bereits aus der WO 96/16048 bekannt.

Aus der WO 98/47367 ist eine Reihe von Wirkstoffkombinationen von Prothioconazole mit einer Vielzahl anderer fungizider Verbindungen bekannt.

Aus der WO 01/80641 sind fungizide Wirkstoffkombinationen aus Methoximinoessigsäureamid-Derivaten mit einer Vielzahl von Fungiziden bekannt, die auch Prothioconazol einschließen.

Aus der WO 98/47370 sind fungizide Wirkstoffkombinationen aus Halogenbenzimidazolen mit einer Vielzahl von Fungiziden bekannt, unter denen auch Prothioconazol genannt ist.

Boscalid der Formel II und seine Verwendung als Pflanzenschutzmittel ist in der EP-B 0 545 099 beschrieben.

Im Hinblick auf eine Senkung der Aufwandmengen und eine Verbesserung des Wirkungsspektrums der bekannten Verbindungen I bis II lagen der vorliegenden Erfindung Mischungen als Aufgabe zugrunde, die bei verringerter Gesamtmenge an ausgebrachten Wirkstoffen eine verbesserte Wirkung gegen Schadpilze aufweisen (synergistische Mischungen).

Demgemäß wurde die eingangs definierte Mischung von Prothioconazole mit einem weiteren Fungizid gefunden. Es wurde außerdem gefunden, daß sich bei gleichzeitiger, und zwar gemeinsamer oder getrennter Anwendung der Verbindung I und der Verbindung II oder bei Anwendung der Verbindung I und der Verbindung II nacheinander Schadpilze besser bekämpfen lassen, als mit den Einzelverbindungen allein.

Das 2-[2-(1-Chlorcyclopropyl)-3-(2-chlorphenyl)-2-hydroxypropyl]-2,4-dihydro-[1,2,4]-triazol-3-thion der Formel I ist aus der WO 96-16 048 bekannt. Die Verbindung kann in der "Thiono"-Form der Formel

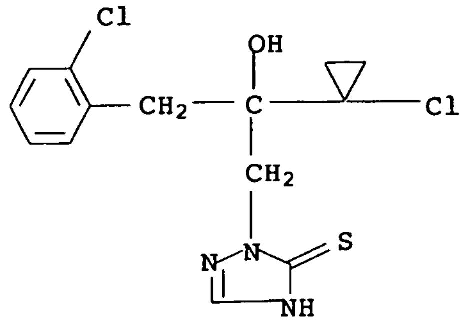

(I)

oder in der tautomeren "Mercapto"-Form der Formel

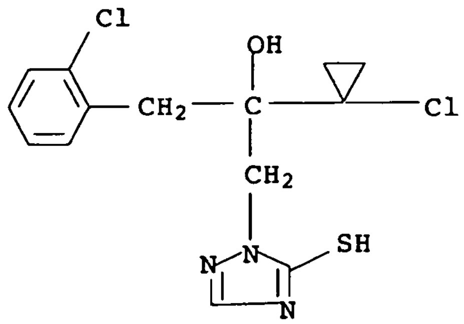

(Ia)

vorliegen. Der Einfachheit halber wird jeweils nur die "Thiono"-Form aufgeführt.

Das Boscalid der Formel II

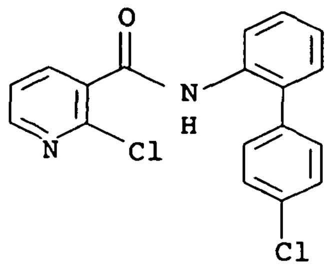

(II)

ist aus der EP-B-0 545 099 bekannt.

Bevorzugt sind Mischungen von Prothioconazole mit Boscalid der Formel II.

Die Verbindung I ist wegen des basischen Charakters der in ihr enthaltenen Stickstoffatome in der Lage, mit anorganischen oder organischen Säuren oder mit Metallionen Salze oder Addukte zu bilden.

Beispiele für anorganische Säuren sind Halogenwasserstoffsäuren wie Fluorwasserstoff, Chlorwasserstoff, Bromwasserstoff und Jodwasserstoff, Schwefelsäure, Phosphorsäure und Salpetersäure.

Als organischen Säuren kommen beispielsweise Ameisensäure, Kohlensäure und Alkansäuren wie Essigsäure, Trifluoressigsäure, Trichloressigsäure und Propionsäure sowie Glycolsäure, Thiocyansäure, Milchsäure, Bernsteinsäure, Zitronensäure, Benzoesäure, Zimtsäure, Oxalsäure, Alkylsulfonsäuren (Sulfonsäuren mit geradkettigen oder verzweigten Alkylresten mit 1 bis 20 Kohlenstoffatomen), Arylsulfonsäuren oder -disulfonsäuren (aromatische Reste wie Phenyl und Naphthyl welche eine oder zwei Sulfonsäuregruppen tragen), Alkylphosphonsäuren (Phosphonsäuren mit geradkettigen oder verzweigten Alkylresten mit 1 bis 20 Kohlenstoffatomen), Arylphosphonsäuren oder -diphosphonsäuren (aromatische Reste wie Phenyl und Naphthyl welche eine oder zwei Phosphorsäurereste tragen), wobei die

Alkyl- bzw. Arylreste weitere Substituenten tragen können, z.B. p-Toluolsulfonsäure, Salizylsäure, p-Aminosalizylsäure, 2-Phenoxybenzoesäure, 2-Acetoxybenzoesäure etc.

Als Metallionen kommen insbesondere die Ionen der Elemente der zweiten Hauptgruppe, insbesondere Calzium und Magnesium, der dritten und vierten Hauptgruppe, insbesondere Aluminium, Zinn und Blei, sowie der ersten bis achten Nebengruppe, insbesondere Chrom, Mangan, Eisen, Kobalt, Nickel, Kupfer, Zink und andere in Betracht. Besonders bevorzugt sind die Metallionen der Elemente der Nebengruppen der vierten Periode. Die Metalle können dabei in den verschiedenen ihnen zukommenden Wertigkeiten vorliegen.

Bevorzugt setzt man bei der Bereitstellung der Mischungen die reinen Wirkstoffe I bis II ein, denen man weitere Wirkstoffe gegen Schadpilze oder gegen andere Schädlinge wie Insekten, Spinntiere oder Nematoden oder auch herbizide oder wachstumsregulierende Wirkstoffe oder Düngemittel beimischen kann.

Die Mischungen aus der Verbindung I mit der Verbindung II bzw. die Verbindung I mit der Verbindung II gleichzeitig, gemeinsam oder getrennt angewandt, zeichnen sich durch eine hervorragende Wirkung gegen ein breites Spektrum von pflanzenpathogenen Pilzen, insbesondere aus der Klasse der Ascomyceten, Basidiomyceten, Phycomyceten und Deuteromyceten aus. Sie sind z.T. systemisch wirksam und können daher auch als Blatt- und Bodenfungizide eingesetzt werden.

Besondere Bedeutung haben sie für die Bekämpfung einer Vielzahl von Pilzen an verschiedenen Kulturpflanzen wie Baumwolle, Gemüsepflanzen (z.B. Gurken, Bohnen, Tomaten, Kartoffeln und Kürbisgewächse), Gerste, Gras, Hafer, Bananen, Kaffee, Mais, Obstpflanzen, Reis, Roggen, Soja, Wein, Weizen, Zierpflanzen, Zuckerrohr sowie an einer Vielzahl von Samen.

Insbesondere eignen sie sich zur Bekämpfung der folgenden pflanzenpathogenen Pilze: Blumeria graminis (echter Mehltau) an Getreide, Erysiphe cichoracearum und Sphaerotheca fuliginea an Kürbisgewächsen, Podosphaera leucotricha an Äpfeln, Uncinula necator an Reben, Puccinia-Arten an Getreide, Rhizoctonia-Arten an Baumwolle, Reis und Rasen, Ustilago-Arten an Getreide und Zukkerrohr, Venturia inaequalis (Schorf) an Äpfeln, Helminthosporium-Arten an Getreide, Septoria nodorum an Weizen, Botrytis cinera (Grauschimmel) an Erdbeeren, Gemüse, Zierpflanzen und Reben, Cercospora arachidicola an Erdnüssen, Pseudocercosporella herpotrichoides an Weizen und Gerste, Pyricularia oryzae an Reis, Phytophthora infestans an Kartoffeln und Tomaten, Plasmopara viticola an Reben, Pseudoperonospora-Arten in Hopfen und Gurken, Alternaria-Arten an Gemüse und Obst, Mycosphaerella-Arten in Bananen sowie Fusarium- und Verticillium-Arten.

Die Verbindung I und die Verbindung II können gleichzeitig, und zwar gemeinsam oder getrennt, oder nacheinander aufgebracht werden, wobei die Reihenfolge bei getrennter Applikation im allgemeinen keine Auswirkung auf den Bekämpfungserfolg hat.

Die Verbindungen I und II werden üblicherweise in einem Gewichtsverhältnis von 20:1 bis 1:20, insbesondere 10:1 bis 1:10, vorzugsweise 5:1 bis 1:5 angewendet.

Die Aufwandmengen der erfindungsgemäßen Mischungen liegen, vor allem bei landwirtschaftlichen Kulturflächen, je nach Art des gewünschten Effekts bei 0,01 bis 8 kg/ha, vorzugsweise 0,1 bis 5 kg/ha, insbesondere 0,1 bis 3,0 kg/ha.

Die Aufwandmengen liegen dabei für die Verbindungen I bei 0,01 bis 1 kg/ha, vorzugsweise 0,05 bis 0,5 kg/ha, insbesondere 0,05 bis 0,3 kg/ha.

Die Aufwandmengen für die Verbindungen II liegen entsprechend bei 0,01 bis 1 kg/ha, vorzugsweise 0,02 bis 0,5 kg/ha, insbesondere 0,05 bis 0,3 kg/ha.

Bei der Saatgutbehandlung werden im allgemeinen Aufwandmengen an Mischung von 0,001 bis 250 g/kg Saatgut, vorzugsweise 0,01 bis 100 g/kg, insbesondere 0,01 bis 50 g/kg verwendet.

Sofern für Pflanzen pathogene Schadpilze zu bekämpfen sind, erfolgt die getrennte oder gemeinsame Applikation der Verbindung I und der Verbindung II oder der Mischungen aus der Verbindung I mit der Verbindung II durch Besprühen oder Bestäuben der Samen, der Pflanzen oder der Böden vor oder nach der Aussaat der Pflanzen oder vor oder nach dem Auflaufen der Pflanzen.

Die erfindungsgemäßen fungiziden synergistischen Mischungen bzw. die Verbindung I und die Verbindung II können beispielsweise in Form von direkt versprühbaren Lösungen, Pulver und Suspensionen oder in Form von hochprozentigen wäßrigen, öligen oder sonstigen Suspensionen, Dispersionen, Emulsionen, Öldispersionen, Pasten, Stäubemitteln, Streumitteln oder Granulaten aufbereitet und durch Versprühen, Vernebeln, Verstäuben, Verstreuen oder Gießen angewendet werden. Die Anwendungsform ist abhängig vom Verwendungszweck; sie soll in jedem Fall eine möglichst feine und gleichmäßige Verteilung der erfindungsgemäßen Mischung gewährleisten.

Die Formulierungen werden in an sich bekannter Weise hergestellt, z.B. durch Zugabe von Lösungsmitteln und/oder Trägerstoffen. Den Formulierungen werden üblicherweise inerte Zusatzstoffe wie Emulgiermittel oder Dispergiermittel beigemischt.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta- und Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol- oder Tributylphenylpolyglycolether, Alkylarylpolyetheralkohole, Isotridecylalkohol, Fettalkoholethylenoxid- Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose in Betracht.

Pulver Streu- und Stäubemittel können durch Mischen oder gemeinsames Vermahlen der Verbindung I und der Verbindung II oder der Mischung aus der Verbindung I mit der Verbindung II mit einem festen Trägerstoff hergestellt werden.

Granulate (z.B. Umhüllungs-, Imprägnierungs- oder Homogengranulate) werden üblicherweise durch Bindung des Wirkstoffs oder der wirkstoffe an einen festen Trägerstoff hergestellt.

Als Füllstoffe bzw. feste Trägerstoffe dienen beispielsweise Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Formulierungen enthalten im allgemeinen 0,1 bis 95 Gew.-%, vorzugsweise 0,5 bis 90 Gew.-% der Verbindung I und der Verbindung II bzw. der Mischung aus der Verbindung I mit der Verbindung II. Die Wirkstoffe werden dabei in einer Reinheit von 90% bis 100%, vorzugsweise 95% bis 100% (nach NMR- oder HPLC-Spektrum) eingesetzt.

Die Anwendung der Verbindung I mit der Verbindung II der Mischungen oder der entsprechenden Formulierungen erfolgt so, daß man die Schadpilze, deren Lebensraum oder die von ihnen freizuhaltenden Pflanzen, Samen, Böden, Flächen, Materialien oder Räume mit einer fungizid wirksamen Menge der Mischung, bzw. der Verbindung I mit der Verbindung II bei getrennter Ausbringung, behandelt.

Die Anwendung kann vor oder nach dem Befall durch die Schadpilze erfolgen.

Anwendungsbeispiel

Die synergistische Wirkung der erfindungsgemäßen Mischungen ließ sich durch die folgenden Versuche zeigen:

Die Wirkstoffe wurden getrennt oder gemeinsam als 10%ige Emulsion in einem Gemisch aus 85 Gew.-% Cyclohexanon und 5 Gew.-% Emulgator aufbereitet und entsprechend der gewünschten Konzentration mit Wasser verdünnt.

Die Auswertung erfolgte durch Feststellung der befallenen Blattflächen in Prozent. Diese Prozent-Werte wurden in Wirkungsgrade umgerechnet. Der Wirkungsgrad (W) wurde nach der Formel von Abbot wie folgt bestimmt:

$$W = \left(1 - \frac{\alpha}{\beta}\right) \bullet 100$$

- $\alpha$ entspricht dem Pilzbefall der behandelten Pflanzen in % und
- $\beta$ entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 wiesen die behandelten Pflanzen keinen Befall auf.

Die zu erwartenden Wirkungsgrade der Wirkstoffmischungen wurden nach der Colby Formel [R.S. Colby, Weeds 15, 20-22 (1967)] ermittelt und mit den beobachteten Wirkungsgraden verglichen.

$$\text{Colby Formel: } \mathbf{E = x + y - x \cdot y/100}$$

- E zu erwartender Wirkungsgrad, ausgedrückt in % der unbehandelten Kontrolle, beim Einsatz der Mischung aus den Wirkstoffen A und B in den Konzentrationen a und b
- x der Wirkungsgrad, ausgedrückt in % der unbehandelten Kontrolle, beim Einsatz des Wirkstoffs A in der Konzentration a
- y der Wirkungsgrad, ausgedrückt in % der unbehandelten Kontrolle, beim Einsatz des Wirkstoffs B in der Konzentration b

Anwendungsbeispiel 1: Wirksamkeit gegen Weizenmehltau verursacht durch *Erysiphe [syn. Blumeria] graminis* forma specialis. *tritici* Blätter von in Töpfen gewachsenen Weizenkeimlingen der Sorte "Kanzler" wurden mit wässriger Wirkstoffaufbereitung, die aus einer Stammlösung bestehend aus 10 % Wirkstoff, 85 % Cyclohexanon und 5 % Emulgiermittel angesetzt wurde, bis zur Tropfnässe besprüht und 24 Stunden nach dem Antrocknen des Spritzbelages mit Sporen des Weizenmehltaus (*Erysiphe [syn. Blumeria] graminis* forma specialis. *tritici*) bestäubt. Die Versuchspflanzen wurden anschließend im Gewächshaus bei Temperaturen zwischen 20 und 24° C und 60 bis 90 % relativer Luftfeuchtigkeit aufgestellt. Nach 7 Tagen wurde das Ausmaß der Mehltauentwicklung visuell in % Befall der gesamten Blattfläche ermittelt.

Die visuell ermittelten Werte für den Prozentanteil befallener Blattflächen wurden in Wirkungsgrade als % der unbehandelten Kontrolle umgerechnet. Wirkungsgrad 0 ist gleicher Befall wie in der unbehandelten Kontrolle, Wirkungsgrad 100 ist 0 % Befall. Die zu erwartenden Wirkungsgrade für Wirkstoffkombinationen wurden nach der obengenannten Colby-Formel ermittelt und mit den beobachteten Wirkungsgraden verglichen.

Tabelle 1

| Wirkstoff | Wirkstoffkonzentration in der Spritzbrühe in ppm | Wirkungsgrad in % der unbehandelten Kontrolle |
|---|---|---|
| Kontrolle (unbehandelt) | (90 % Befall) | 0 |
| Verbindung I = Prothioconazole | 4<br>1<br>0,25 | 42<br>0<br>0 |
| Verbindung II = Boscalid | 4<br>1<br>0,25<br>0,06 | 0<br>0<br>0<br>0 |

Tabelle 2

| Erfindungsgemäße Kombinationen | Beobachteter Wirkungsgrad | Berechneter Wirkungsgrad*) |
|---|---|---|
| Verbindung I = Prothioconazole + Verbindung II = Boscalid 0,25 + 4 ppm Mischung 1 : 16 | 19 | 0 |
| Verbindung I = Prothioconazole + Verbindung II = Boscalid 1 + 4 ppm Mischung 1 : 4 | 92 | 0 |
| Verbindung I = Prothioconazole + Verbindung II = Boscalid 0,25 + 1 ppm Mischung 1 : 4 | 53 | 0 |
| Verbindung I = Prothioconazole + Verbindung II = Boscalid 1 + 0,25 ppm Mischung 4 : 1 | 30 | 0 |
| Verbindung I = Prothioconazole + Verbindung II = Boscalid 1 + 0,06 ppm Mischung 16 : 1 | 19 | 0 |
| *) berechneter Wirkungsgrad nach der Colby-Formel | | |

Aus den Ergebnissen des Versuches geht hervor, daß der beobachtete Wirkungsgrad in allen Mischungsverhältnissen höher ist, als nach der Colby-Formel vorausberechnete Wirkungsgrad (aus Synerg 176. XLS).

Anwendungsbeispiel 2 : Protektive Wirksamkeit gegen den durch *Sphaerotheca fuliginea* verursachten Gurkenmehltau

Blätter von in Töpfen gewachsenen Gurkenkeimlingen der Sorte "Chinesische Schlange" wurden im Keimblattstadium mit wässriger Wirkstoffaufbereitung, die aus einer Stammlösung bestehend aus 10 % Wirkstoff, 85 % Cyclohexanon und 5 % Emulgiermittel angesetzt wurde, bis zur Tropfnässe besprüht. 20 Stunden nach dem Antrocknen des Spritzbelages wurden die Pflanzen mit einer wsrigen Sporensuspension des Gurkenmehltaus (*Sphaerotheca fuliginea*) inokuliert. Anschließend wurden die Pflanzen im Gewächshaus bei Temperaturen zwischen 20 und 24° C und 60 bis 80 % relativer Luftfeuchtigkeit für 7 Tage kultiviert. Dann wurde das Ausmaß der Mehltauentwicklung visuell in %-Befall der Keimblattfläche ermittelt.
Die visuell ermittelten Werte für den Prozentanteil befallener Blattflächen wurden in Wirkungsgrade als % der unbehandelten Kontrolle umgerechnet. Wirkungsgrad 0 ist gleicher Befall wie in der unbehandelten Kontrolle, Wirkungsgrad 100 ist 0 % Befall. Die zu erwartenden Wirkungsgrade für Wirkstoffkombinationen wurden nach der obengenannten Colby-Formel ermittelt und mit den beobachteten Wirkungsgraden verglichen.

Tabelle 3

| Wirkstoff | Wirkstoffkonzentration in der Spritzbrühe in ppm | Wirkungsgrad in % der unbehandelten Kontrolle |
|---|---|---|
| Kontrolle (unbehandelt) | (90 % Befall) | 0 |
| Verbindung I<br>= Prothioconazole | 1<br>0,25 | 78<br>56 |
| Verbindung II<br>= Boscalid | 4<br>0,25<br>0,06 | 78<br>0<br>0 |

Tabelle 4

| Erfindungsgemäße Kombinationen | Beobachteter Wirkungsgrad | Berechneter Wirkungsgrad*) |
|---|---|---|
| Verbindung I = Prothioconazole + Verbindung II = Boscalid 0,25 + 4 ppm Mischung 1 : 16 | 99 | 90 |
| Verbindung I = Prothioconazole + Verbindung II = Boscalid 1 + 0,25 ppm Mischung 4 : 1 | 89 | 78 |
| Verbindung I = Prothioconazole + Verbindung II = Boscalid 0,25 + 0,06 ppm Mischung 4 : 1 | 78 | 56 |
| Verbindung I = Prothioconazole + Verbindung II = Boscalid 1 + 0,06 ppm Mischung 16 : 1 | 94 | 78 |
| *) berechneter Wirkungsgrad nach der Colby-Formel | | |

Aus den Ergebnissen des Versuches geht hervor, daß der beobachtete Wirkungsgrad in allen Mischungsverhältnissen höher ist, als nach der Colby-Formel vorausberechnete Wirkungsgrad (aus Synerg 176. XLS).

**Patentansprüche**

1. Fungizide Mischung, enthaltend

(1) 2-[2-(1-Chlorcyclopropyl)-3-(2-chlorphenyl)-2-hydroxypropyl]-2,4-dihydro-[1,2,4]-triazol-3-thion (Prothioconazole) der Formel I oder dessen Salze oder Addukte

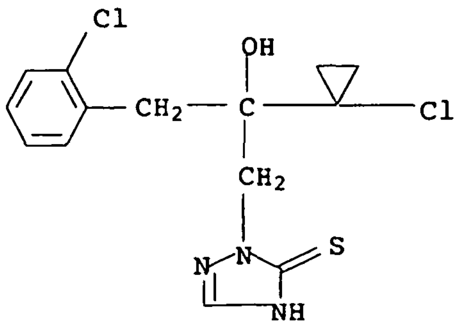

(I)

(Prothioconazole)

und eine weitere fungizide Verbindung, ausgewählt aus
(2) Boscalid der Formel II

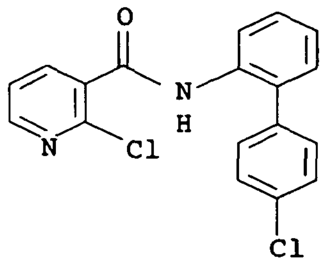

(II)

in einer synergistisch wirksamen Menge.

2. Fungizide Mischung nach Anspruch 1, **dadurch gekennzeichnet, dass** das Gewichtsverhältnis von Prothioconazole der Formel I zu dem Fungizid der Formel II 20 : 1 bis 1 : 20 beträgt.

3. Verfahren zur Bekämpfung von Schadpilzen, **dadurch gekennzeichnet, daß** man die Schadpilze, deren Lebensraum oder die von ihnen freizuhaltenden Pflanzen, Samen, Böden, Flächen, Materialien oder Räume mit der fungiziden Mischung gemäß Anspruch 1 behandelt.

4. Verfahren nach Anspruch 3, **dadurch gekennzeichnet, daß** man die Verbindung der Formel I gemäß Anspruch 1 und eine Verbindung der Formel II gemäß Anspruch 1 gleichzeitig, und zwar gemeinsam oder getrennt, oder nacheinander ausbringt.

5. Verfahren nach Anspruch 3 oder 4, **dadurch gekennzeichnet, daß** man die fungizide Mischung oder die Verbindung der Formel I mit einer Verbindung der Formel II gemäß Anspruch 1 in einer Menge von 0,01 bis 8 kg/ha aufwendet.

6. Fungizide Mittel, enthaltend die fungizide Mischung gemäß Anspruch 1 sowie einen festen oder flüssigen Träger.

**Claims**

1. A fungicidal mixture, comprising

(1) 2-[2-(1-chlorocyclopropyl)-3-(2-chlorophenyl)-2-hydroxypropyl]-2,4-dihydro-[1,2,4]-triazole-3-thione (prothioconazole) of the formula I or a salt or adduct thereof

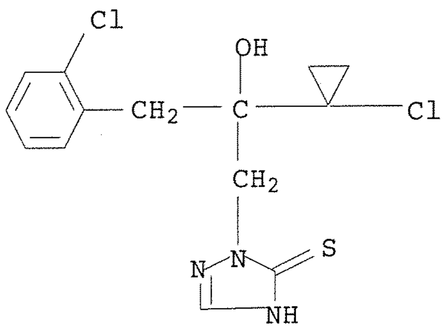

(I)

(prothioconazole)

and a further fungicidal compound, selected from the group consisting of
(2) boscalid of the formula II

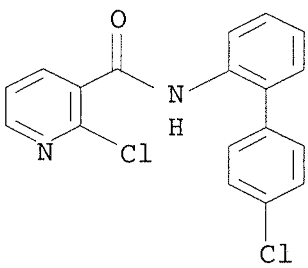

(II)

in a synergistically effective amount.

2. The fungicidal mixture according to claim 1, wherein the weight ratio of prothioconazole of the formula I to the fungicide of formula II is from 20 : 1 to 1 : 20.

3. A method for controlling harmful fungi, which comprises treating the harmful fungi, their habitat or the plants, seeds, soils, areas, materials or spaces to be kept free from them with the fungicidal mixture according to claim 1.

4. The method according to claim 3, wherein the compound of the formula I as set forth in claim 1 and a compound of the formula II as set forth in claim 1 are applied simultaneously, that is jointly or separately, or in succession.

5. The method according to claim 3 or 4, wherein the fungicidal mixture or the compound of the formula I and a compound of the formula II as set forth in claim 1 is/are applied in an amount of from 0.01 to 8 kg/ha.

6. A fungicidal composition, comprising the fungicidal mixture according to claim 1 and a solid or liquid carrier.

## Revendications

1. Mélange fongicide, contenant :

(1) de la 2-[2-(1-chlorocyclopropyl)-3-(2-chlorophényl)-2-hydroxypropyl]-2,4-dihydro-[1,2,4]-triazol-3-thione (prothioconazole) de formule I ou ses sels ou produits d'addition

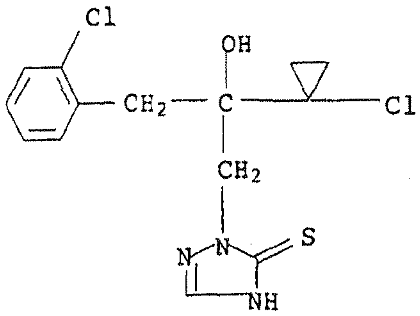

(I)

(Prothioconazole)

et un autre composé fongicide, sélectionné parmi :
(2) le boscalide de formule II

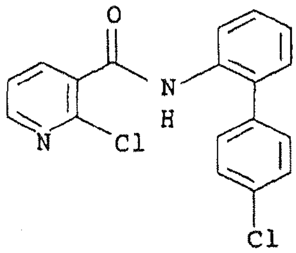

(II)

dans une quantité efficace sur le plan synergique.

2. Mélange fongicide selon la revendication 1, **caractérisé en ce que** le rapport pondéral du prothioconazole de formule I au fongicide de formule II est de 20:1 à 1:20.

3. Procédé de lutte contre les champignons parasites, **caractérisé en ce que** l'on traite les champignons parasites, leur habitat ou les végétaux, semences, sols, surfaces, matières ou espaces à préserver de ceux-ci avec le mélange fongicide selon la revendication 1.

4. Procédé selon la revendication 3, **caractérisé en ce qu'**on applique le composé de formule I selon la revendication 1 et un composé de formule II selon la revendication 1 simultanément, à savoir ensemble ou séparément, ou l'un après l'autre.

5. Procédé selon la revendication 3 ou 4, **caractérisé en ce qu'**on utilise le mélange fongicide ou le composé de formule I avec un composé de formule II selon la revendication 1 dans une quantité de 0,01 à 8 kg/ha.

6. Agent fongicide contenant le mélange fongicide selon la revendication 1 ainsi qu'un support solide ou liquide.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9616048 A
- WO 9847367 A
- WO 0180641 A
- WO 9847370 A
- EP 0545099 B


### In der Beschreibung aufgeführte Nicht-Patentliteratur


- **R.S. COLBY.** *Weeds,* 1967, vol. 15, 20-22